(19) Europäisches Patentamt / European Patent Office / Office européen des brevets

(11) **EP 4 464 667 A1**

(12) **EUROPEAN PATENT APPLICATION**
published in accordance with Art. 153(4) EPC

(43) Date of publication:
**20.11.2024 Bulletin 2024/47**

(21) Application number: **22920447.4**

(22) Date of filing: **16.11.2022**

(51) International Patent Classification (IPC):
**C01F 7/785** (2022.01)   **C01G 9/00** (2006.01)
**C08K 3/26** (2006.01)

(52) Cooperative Patent Classification (CPC):
**C01G 9/006; C01F 7/785; C01G 9/00; C08K 3/26**

(86) International application number:
**PCT/JP2022/042554**

(87) International publication number:
**WO 2023/135927 (20.07.2023 Gazette 2023/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.01.2022 JP 2022004697**

(71) Applicant: **SETOLAS Holdings, Inc.
Takamatsu-shi, Kagawa 760-0026 (JP)**

(72) Inventor: **HOSOI, Ken
Sakaide-shi, Kagawa 762-0012 (JP)**

(74) Representative: **Vossius & Partner
Patentanwälte Rechtsanwälte mbB
Siebertstrasse 3
81675 München (DE)**

(54) **ZINC-CONTAINING HYDROTALCITE**

(57)    The invention provides hydrotalcite that can inhibit foaming and can exhibit excellent heat stability when added to resins such as chlorine-containing resins, while also inhibiting resin coloration, without the combined use of additives with the resins. The hydrotalcite of the invention is represented by formula (1) and has a specific surface area of 120 $m^2$/g to 250 $m^2$/g as determined by the BET method.

$$M^{2+}{}_xZn_y \cdot M^{3+}{}_zO_{x+y+(3/2)z} \qquad (1)$$

(In the formula, $M^{2+}$ represents at least one divalent metal ion, $M^{3+}$ represents at least one trivalent metal ion, and x, y and z represent numbers satisfying $0 < x \le 0.5$, $0 < y \le 0.2$ and $0 < z \le 0.4$.)

**(Cont. next page)**

EP 4 464 667 A1

# FIG. 1

**Description**

FIELD

The present invention relates to hydrotalcite to be added to a resin such as a chlorine-containing resin.

BACKGROUND

Hydrotalcite is known as a compound which is added to resins as a heat stabilizer for chlorine-containing resins (e.g., vinyl chloride-based resins), or as a deoxidizer for olefin-based resins.

Hydrotalcite has a drawback in that it produces foaming in molded resins due to interlayer water or water of crystallization that result from heat during resin processing steps or during their use. This drawback is countered by burning the hydrotalcite at 200°C to 300°C to produce decrystallized water; however, water-decrystallized hydrotalcite has lower ion exchange ability and thus exhibits insufficient thermostability. To deal with this problem, the hydrotalcites described in PTLs 1 and 2, for example, are designed to be improved by their use in combination with magnesium oxide or magnesium hydroxide.

[CITATION LIST]

[PATENT LITERATURE]

[PTL 1] Japanese Unexamined Patent Publication No. 63-46248
[PTL 2] Japanese Unexamined Patent Publication No. 3-157437

SUMMARY

[TECHNICAL PROBLEM]

With the improved methods described in PTLs 1 and 2, however, the production process becomes more complicated due to the combined use of additives, such as magnesium oxide and magnesium hydroxide, and this has left some room for improvement in terms of productivity.

When a chlorine-containing resin is used as the resin, metal ions (such as $Mg^{2+}$) produced by neutralizing reaction between the hydrotalcite surface and hydrochloric acid dissociated from the resin by heat during processing form metal complexes with the double bond portions in the resin molecules formed by dissociation of hydrochloric acid, thus causing a problem of coloration of the resin by the coordination color of the complex; however, this problem is not addressed by the improved methods of PTLs 1 and 2.

Such coloration of the resin can be improved by combined use of Zn-st and β-diketone, but since this requires addition of Zn-st and β-diketone, the production process becomes more complex and unsatisfactory in terms of productivity.

It is an object of the present invention to provide hydrotalcite that can inhibit foaming and exhibit excellent heat stability in resins such as chlorine-containing resins while also inhibiting resin coloration, without the combined use of additives with the resins.

[SOLUTION TO PROBLEM]

The present inventors have diligently studied this issue with the goal of achieving the aforementioned object, and as a result have found that if zinc (Zn)-containing hydrotalcite is strongly burned under the specific temperature conditions of 400°C to 850°C, it is possible to obtain hydrotalcite having a high specific surface area not found in hydrotalcite of the prior art, and additionally that when this hydrotalcite is added to a resin, such as a chlorine-containing resin, foaming is inhibited and satisfactory heat stability can be exhibited, while coloration of the resin can also be inhibited.

The present invention has been completed based on these findings and includes the following aspects.

One aspect of the invention (aspect 1) is hydrotalcite represented by the following formula (1) and having a specific surface area of 120 $m^2$/g to 250 $m^2$/g as determined by the BET method.

$$M^{2+}_xZny \cdot M^{3+}_zO_{x+y+(3/2)z} \qquad (1)$$

(In the formula, $M^{2+}$ represents at least one divalent metal ion, $M^{3+}$ represents at least one trivalent metal ion, and x, y and z represent numbers satisfying $0 < x \leq 0.5$, $0 < y \leq 0.2$ and $0 < z \leq 0.4$.

The hydrotalcite of aspect 1 is zinc-containing hydrotalcite represented by formula (1) above and having a specific surface area of 120 $m^2$/g to 250 $m^2$/g as determined by the BET method, or in other words, it has been strongly burned under the specific temperature conditions of 400°C to 850°C.

In the hydrotalcite of aspect 1, the interlayer water or carbonate ions (interlayer anions) present between the layers of the laminar structure are removed by the strong burning, thus helping to prevent foaming caused by such components.

In conventional burned hydrotalcite, the ion exchange ability decreases by dissociation of interlayer water present between the layers in the laminar structure, whereby non-trapped chloride ions (Cl$^-$) tend to be produced and the resulting generated hydrochloric acid (HCl) gas causes the heat stability to be reduced; however, with the hydrotalcite of aspect 1, water present within the base layers and between layers in the laminar structure becomes released during conversion to oxides by strong burning, such that the specific surface area is drastically increased to 120 $m^2$/g to 250 $m^2$/g, thereby allowing a greater portion to react with acids (such as Cl$^-$) and tending to cause neutralizing reaction with the acids (high acid-accepting ability) such that excellent heat stability is exhibited.

Since the hydrotalcite of aspect 1 also contains zinc (Zn), metal complexes of zinc ion ($Zn^{2+}$) that have formed with the double bond portions in the resin molecules still exist even if metal ions other than Zn (such as $Mg^{2+}$) have formed metal complexes with the double bond portions in the resin molecules as described above, and therefore the coordination colors of each complex are in a complementary color relationship, canceling out each other's coordination color and allowing coloration of the resin to be inhibited as a result.

The hydrotalcite of aspect 1 that comprises Zn also forms zinc oxide (ZnO) on the surface by strong burning, and the ZnO has a lower content of moisture generated by neutralizing reaction compared to MgO, thus making foaming or heat stability reduction less likely.

Thus, the hydrotalcite of aspect 1 can inhibit foaming and exhibit excellent heat stability in resins such as chlorine-containing resins while also inhibiting resin coloration, without the combined use of additives with the resins.

According to another aspect (aspect 2) of the invention, the specific surface area of the hydrotalcite of aspect 1 is 150 $m^2$/g to 200 $m^2$/g.

The hydrotalcite of aspect 2 having a specific surface area in this specified range can more reliably exhibit the function and effect of aspect 1.

According to yet another aspect (aspect 3) of the invention, the $M^{2+}$ in formula (1) is $Mg^{2+}$ and the $M^{3+}$ is $Al^{3+}$, for the hydrotalcite of aspect 1 or 2.

The hydrotalcite of aspect 3 having this specified composition can even more reliably exhibit the function and effect of aspect 1.

According to yet another aspect (aspect 4) of the invention, the weight loss during high heating at 500°C is 10% or lower for the hydrotalcite according to any one of aspects 1 to 3.

Since the hydrotalcite of aspect 4 has a weight loss during high heating of 10% or lower which is almost entirely due to decrease in adhering moisture, it is possible to even more reliably inhibit generation of foam.

[ADVANTAGEOUS EFFECTS OF INVENTION]

According to the invention it is possible to provide hydrotalcite that can inhibit foaming and exhibit excellent heat stability in resins such as chlorine-containing resins while also inhibiting resin coloration, without the combined use of additives with the resins.

BRIEF DESCRIPTION OF DRAWINGS

Fig. 1 is a schematic diagram illustrating structural change due to burning of hydrotalcite.
Fig. 2 is a graph showing X-ray diffraction (XRD) measurement results for Examples and Comparative Examples of the invention.
Fig. 3 is a reference table showing the results of a static heat stability test for Examples and Comparative Examples of the invention.

DESCRIPTION OF EMBODIMENTS

The hydrotalcite of the invention will now be described in detail.

[Hydrotalcite]

The hydrotalcite of the invention is strongly burned zinc-containing hydrotalcite, which is represented by formula (1), having a specific surface area of 120 m$^2$/g to 250 m$^2$/g, and obtained by strong burning of unburned zinc-containing hydrotalcite under the specific temperature conditions of 400°C to 850°C, as determined by the BET method.

$$M^{2+}{}_xZn_y \cdot M^{3+}{}_zO_{x+y+(3/2)z} \qquad (1)$$

(In the formula, M$^{2+}$ represents at least one divalent metal ion, M$^{3+}$ represents at least one trivalent metal ion, and x, y and z represent numbers satisfying $0 < x \le 0.5$, $0 < y \le 0.2$ and $0 < z \le 0.4$.

Since interlayer water and carbonate ions (interlayer anions) present between layers of the laminar structure of hydrotalcite before burning are removed by the strong burning, the hydrotalcite of the invention is less likely to produce foam by interlayer water or carbonate ions even when it is used as an additive in a resin composition or molded article.

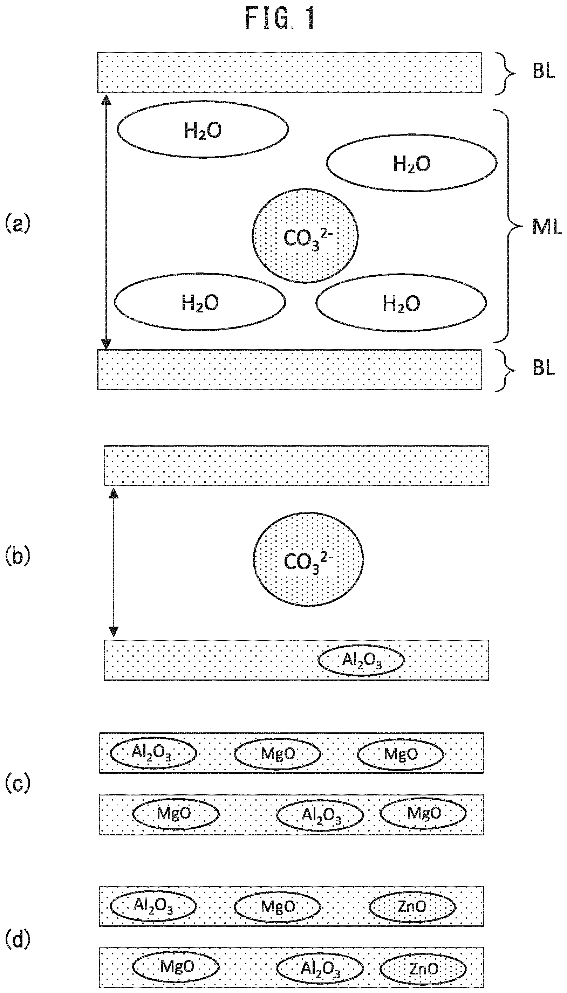

In conventional burned hydrotalcite, the ion exchange ability decreases by dissociation of interlayer water and non-trapped chloride ions (Cl$^-$) tend to be produced, the generated hydrochloric acid (HCl) gas causing the heat stability to be reduced; however, with the hydrotalcite of the invention, as shown in Fig. 1, water present within the base layers and between layers in the laminar structure becomes released during conversion to oxides by strong burning (see Fig. 1 (d)), causing the specific surface area to drastically increase to 120 m$^2$/g to 250 m$^2$/g, thereby allowing a greater portion to react with acids (such as Cl$^-$) and tending to cause neutralizing reaction with the acids (high acid-accepting ability), such that excellent heat stability is exhibited.

Fig. 1 is a schematic diagram illustrating structural change due to burning of hydrotalcite. Specifically, Fig. 1(a) shows the laminar structure of unburned zinc-free hydrotalcite, (b) shows the laminar structure of burned zinc-free hydrotalcite obtained when unburned zinc-free hydrotalcite is burned under temperature conditions of 200°C to 300°C (i.e. conventional burning temperature conditions), (c) shows the laminar structure of strongly burned zinc-free hydrotalcite obtained when unburned zinc-free hydrotalcite is strongly burned under temperature conditions of 400°C to 850°C, and (d) shows the laminar structure of strongly burned zinc-containing hydrotalcite (i.e. hydrotalcite of the invention) obtained when unburned zinc-containing hydrotalcite is strongly burned under temperature conditions of 400°C to 850°C.

In Fig. 1, the reference BL represents a base layer of hydrotalcite, and the reference ML represents interlayer hydrotalcite.

Since the hydrotalcite of the invention contains zinc (Zn), metal complexes of zinc ion (Zn$^{2+}$) that have formed with the double bond portions in the resin molecules still exist even if metal ions other than Zn (such as Mg$^{2+}$) have formed metal complexes with the double bond portions in the resin molecules as described above, and therefore the coordination colors of each complex are in a complementary color relationship, canceling out each other's coordination color and allowing coloration of the resin to be inhibited as a result.

As shown in Fig. 1(d), the hydrotalcite of the invention that comprises Zn also forms zinc oxide (ZnO) on the surface by strong burning, and the ZnO has a lower content of moisture generated by neutralizing reaction compared to MgO, thus making foaming or heat stability reduction less likely.

The hydrotalcite of the invention can thus inhibit foaming and exhibit excellent heat stability in resins such as chlorine-containing resins while also inhibiting resin coloration, without the combined use of additives with the resins.

There are no particular restrictions on the type of metals for M$^{2+}$ (divalent metal ion) and M$^{3+}$ (trivalent metal ion) in formula (1) for the hydrotalcite of the invention, and they may be any metals that can be included in hydrotalcite.

For the hydrotalcite of the invention, M$^{2+}$ in formula (1) is preferably magnesium ion (Mg$^{2+}$) and M$^{3+}$ is preferably aluminum ion (Al$^{3+}$). If the hydrotalcite has this specific composition it will be able to even more reliably exhibit the function and effect described above.

The hydrotalcite of the invention must have a specific surface area of 120 m$^2$/g to 250 m$^2$/g, and preferably 150 m$^2$/g to 200 m$^2$/g, as determined by the BET method. If the specific surface area as determined by the BET method is within this specified range it will be possible to even more reliably exhibit the function and effect described above.

The hydrotalcite of the invention, which has this specified specific surface area (a specific surface area of 120 m$^2$/g to 250 m$^2$/g as determined by the BET method) and is represented by formula (1), can be obtained by strong burning of unburned zinc-containing hydrotalcite under the specific temperature conditions of 400°C to 850°C, as mentioned above.

The unburned hydrotalcite to be used for production of the hydrotalcite of the invention may be any publicly known zinc-containing hydrotalcite without any particular restrictions so long as it comprises zinc.

(Burning temperature)

The burning temperature for production of the hydrotalcite of the invention will now be explained.

With conventional strong burning of hydrotalcite at high temperatures of 400°C or above, the interlayer water dissociates and tends to interfere with the ion exchange ability, and therefore when the hydrotalcite is used as a resin filler, the chloride ions (Cl⁻) fail to be trapped and the heat stability decreases, becoming a cause of coloration. Under the current circumstances, therefore, conventional burned hydrotalcite is burned under temperature conditions of about 200°C to 300°C.

According to the invention, however, zinc-containing hydrotalcite is used, to exhibit excellent heat stability and inhibit resin coloration even with strong burning under high-temperature conditions of 400°C to 850°C.

When zinc-containing hydrotalcite is burned at a temperature of lower than 400°C it becomes difficult to obtain oxides with high acid reactivity, and if it is burned at a temperature of higher than 850°C, the laminar structure of the hydrotalcite is unmaintainable and a spinel structure tends to form, resulting in a tendency toward reduced heat stability. According to the invention the preferred range for the burning temperature is 450°C to 800°C.

Hydrotalcite that is strongly burned under such specified temperature conditions can be confirmed by having the specific surface area mentioned above as determined by the BET method, and also by X-ray diffraction (XRD) or thermogravimetric differential thermal analysis (TG-DTA).

XRD, for example, can confirm the presence or absence of oxides or a spinel structure resulting from burning, while TG-DTA allows confirmation of the presence or absence of interlayer water or interlayer anions in hydrotalcite, or hydroxyl groups (OH groups) in the base layer.

(Burning time)

The burning time for production of the hydrotalcite of the invention is not particularly restricted, and it may be a time that allows burning to an extent that oxide peaks can be confirmed by XRD. This burning time will depend on the burning temperature but may be 30 minutes or longer, preferably 1 hour or longer and even more preferably 2 hours or longer.

(Weight loss during high heating)

The hydrotalcite of the invention preferably has a weight loss of 10% or lower during high heating at 500°C.

Conventional burned hydrotalcite has the water adhering to the particle surfaces removed in a drying step at about 120°C, but because it is difficult to remove interlayer water and interlayer anions and the OH groups in the hydrotalcite base layer via an ordinary burning step (a burning step at 200°C to 300°C), the weight loss during high heating at 500°C tends to be high (such as 20% or greater), resulting in a greater tendency for foaming in the interlayer water.

With the hydrotalcite of the invention, on the other hand, interlayer water, interlayer anions and OH groups are easily removed by strong burning, and therefore the weight loss during high heating at 500°C tends to be lower and foaming in the interlayer water is less likely to occur. A weight loss during high heating of 10% or lower will be almost entirely due to decrease in adhering moisture, making it possible to even more reliably inhibit generation of foam.

The weight loss during high heating is preferably 5% or lower and more preferably 3% or lower. There is no particular lower limit for the weight loss during high heating, and it may be 0.5%, for example.

(Surface treatment)

The hydrotalcite of the invention may also be surface treated for improved dispersibility in resins. The surface treatment agent used for surface treatment is not particularly restricted, and examples include anionic surfactants, cationic surfactants, phosphoric acid ester treatment agents, silane coupling agents, titanate coupling agents, aluminum coupling agents, silicone-based treatment agents, silicic acid and water glass. Particularly preferred surface treatment agents include one or more surface treatment agents selected from the group consisting of oleic acid, stearic acid, octanoic acid and octylic acid. The amount of surface treatment agent is not particularly restricted but may be 0.01 to 20 mass% and preferably 0.1 to 15 mass%, with respect to the mass of the hydrotalcite.

The hydrotalcite of the invention may be used in the same manner as conventional hydrotalcite, as an additive for a resin, such as a heat stabilizer or olefin-based resin deoxidizer for a chlorine-containing resin (such as a vinyl chloride-based resin).

The composition of the resin that is to include the hydrotalcite of the invention will now be described in detail.

[Resin composition]

The resin composition of the invention includes a resin, and a strongly burned zinc-containing hydrotalcite represented by formula (1) above and having a specific surface area of 120 m²/g to 250 m²/g as determined by the BET method. Since the resin composition of the invention includes strongly burned zinc-containing hydrotalcite, it exhibits excellent productivity and heat stability, and can be provided for production of molded articles with reduced foaming and coloration.

(Resin)

The resin to be used in the resin composition of the invention may be a resin for any of a variety of purposes, examples including thermoplastic resins such as chlorine-containing resins, and thermosetting resins. These resins may be used alone or in combinations of two or more.

Chlorine-containing resins, as one type of thermoplastic resin to be used in the resin composition of the invention, are not particularly restricted, and examples include vinyl chloride-based resins such as polyvinyl chloride, chlorinated polyvinyl chloride, polyvinylidene chloride, chlorinated polyethylene, vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic anhydride terpolymers, vinyl chloride-styrene-acrylonitrile copolymer, vinyl chloride-butadiene copolymer, vinyl chloride-isoprene copolymer, vinyl chloride-chlorinated propylene copolymer, vinyl chloride-vinylidene chloride-vinyl acetate terpolymer, vinyl chloride-maleic acid ester copolymer, vinyl chloride-methacrylic acid ester copolymer, vinyl chloride-acrylonitrile copolymer, and vinyl chloride-vinyl ether copolymer; and chlorine-based rubbers such as chloroprene rubber, chlorinated butyl rubber, chlorosulfonated polyethylene rubber, chlorinated polyethylene rubber and epichlorohydrin rubber. These chlorine-containing resins may be used alone or in combinations of two or more.

The same chlorine-containing resins may be used in combination with other chlorine-free thermoplastic resins such as acrylonitrile-styrene copolymers, acrylonitrile-butadiene-styrene copolymers, vinyl ethylene-acetate copolymers, ethylene-ethyl (meth)acrylate copolymers or polyesters, and for example, a mixture, block copolymer or graft copolymer of a chlorine-containing resin and a chlorine-free thermoplastic resin may be used.

Thermoplastic resins other than the chlorine-containing resin to be used in the resin composition of the invention are not particularly restricted, and examples include olefin-based resins, polystyrene, copolymers of ethylene with vinyl acetate, copolymers of ethylene with acrylic acid ethers, copolymers of ethylene with methyl acrylate, copolymers of ethylene with vinyl acetate, copolymers of ethylene with acrylic acid ethers, copolymers of ethylene with methyl acrylate, copolymers of polypropylene and propylene with other $\alpha$-olefins, copolymers of polybutene-1, poly 4-methylpentene-1, polystyrene and styrene with acrylonitrile, copolymers of ethylene with propylene diene rubber, copolymers of ethylene with butadiene, and polyvinyl acetate, polylactic acid, polyvinyl alcohol, polyacrylates, polymethacrylates, polyurethanes, polyesters, polyethers, polyamides, ABS, polycarbonates, polyphenylene sulfide and synthetic rubber.

There are no particular restrictions on olefin-based resins among these thermoplastic resins, and examples include copolymers of polyethylene and ethylene with other $\alpha$-olefins, copolymers of polypropylene and propylene with other $\alpha$-olefins and olefin-based resins such as polybutene-1 and poly 4-methylpentene-1, and there are also no particular restrictions on synthetic rubbers, examples of which include ethylenepropylene-diene rubber (EPDM), styrene-butadiene rubber (SBR), acrylonitrile-butadiene rubber (NBR), butyl rubber, isoprene rubber, silicon rubber, fluorine rubber, brominated butyl rubber and epichlorohydrin rubber. These thermoplastic resins may be used alone or in combinations of two or more.

Thermosetting resins to be used in the resin composition of the invention are not particularly restricted, and examples include phenol resins, melamine resins, epoxy resins, unsaturated polyester resins and alkyd resins. These thermosetting resins may also be used alone or in combinations of two or more.

Of the different resins mentioned above, the resin composition of the invention preferably includes a chlorine-containing resin. Chlorine-containing resins are particularly prone to the aforementioned problems such as foaming, heat stability reduction and coloration, but since the resin composition of the invention includes strongly burned zinc-containing hydrotalcite, it can effectively exhibit the aforementioned function and effect, i.e. the function and effect of excellent productivity and heat stability and reduced foaming and coloration, even if the resin composition includes a chlorine-containing resin.

The content of the strongly burned zinc-containing hydrotalcite in the resin composition of the invention is not particularly restricted so long as the effect of the invention is not inhibited, and for example, it may be a content of 0.1 part by mass to 250 parts by mass and preferably 1 part by mass to 200 parts by mass, with respect to 100 parts by mass of the resin.

(Other additives)

The resin composition of the invention may also comprise other additives in addition to the strongly burned zinc-containing hydrotalcite, in ranges that do not interfere with the effect of the invention.

Such other additives are not particularly restricted, and examples include antioxidants, reinforcing agents such as talc, ultraviolet absorbers, lubricants, delustering agents such as fine particulate silica, pigments such as carbon black, flame retardants such as bromine-based flame retardants and phosphoric acid ester-based flame retardants, flame-retardant aids such as zinc stannate or alkali metal stannates, or carbon powder, and fillers such as calcium carbonate. Any of these additives may be used alone or in combinations of two or more.

The amount of such additives is not particularly restricted so long as the effect of the invention is not inhibited, and for example, it may be 0.01 parts by mass to 50 parts by mass with respect to 100 parts by mass of the resin.

The resin composition of the invention can be obtained by mixing or kneading at least the resin with the strongly burned zinc-containing hydrotalcite. There are no particular restrictions on the means used for mixing or kneading of the resin and strongly burned zinc-containing hydrotalcite, and a single-screw or twin-screw extruder, a roller or a Banbury mixer may be used, for example.

[Molded article]

The resin composition of the invention can be used to produce a desired molded article by any publicly known molding means. The molding means for production of the molded article is not particularly restricted, and any molding means may be employed as appropriate for the type of resin and molded article. Examples of such molding means include, but are not particularly limited to, injection molding, extrusion molding, blow molding, press molding, rotational molding, calender molding, sheet forming molding, transfer molding, laminated molding and vacuum molding.

Since a molded article formed from a resin composition of the invention is formed from a resin composition that includes a resin together with strongly burned zinc-containing hydrotalcite represented by formula (1) and having a specific surface area of 120 $m^2/g$ to 250 $m^2/g$ as determined by the BET method, it can be used as a resin product with excellent productivity and heat stability, as well as reduced foaming and coloration, and superior outer appearance and physical properties.

The invention is not restricted to the aforementioned embodiment or the Examples described below, and can incorporate appropriate combinations, substitutions and modifications within a range that is not outside of the object and gist of the invention.

EXAMPLES

The invention will now be explained in greater detail using Examples and Comparative Examples, with the understanding that the invention is not limited only to these Examples.

Example 1

(Production of 450°C-burned MgAlZn-type hydrotalcite)

An acid mixture (A) of 1.5 mol/L magnesium chloride and 0.50 mol/L aluminum chloride, a 5.7 mol/L zinc chloride aqueous solution (B) and an alkaline mixed aqueous solution of 3.3 N caustic soda and 0.2 mol/L sodium carbonate (C) as starting materials, were used in continuous reaction with the flow ratio A:B:C = 1:0.04: 1.38 in a 1 L volume reaction tank, to obtain a reaction product. The pH during the reaction was 9.5.

The obtained reaction product was subjected to solid-liquid separation with a Nutsche filter, and the resulting solid was washed with ion-exchanged water and dried at 105°C for 24 hours. The obtained dried product was pulverized with a hammer mill and then screened with a 150 micron filter to obtain powder.

The resulting powder was then placed in a crucible, the crucible was placed in a kiln previously heated to 450°C, and burning was carried out in air for 2 hours at the same temperature.

The contents were removed out of the burned crucible to obtain 450°C-burned MgAlZn-type hydrotalcite powder for Example 1.

Example 2

(Production of 600°C-burned MgAlZn-type hydrotalcite)

For Example 2, 600°C-burned MgAlZn-type hydrotalcite powder was obtained in the same manner as Example 1, except that the burning temperature was changed to 600°C.

Example 3

(Production of 800°C-burned MgAlZn-type hydrotalcite)

For Example 3, 800°C-burned MgAlZn-type hydrotalcite powder was obtained in the same manner as Example 1, except that the burning temperature was changed to 800°C.

Comparative Example 1

(Production of unburned MgAl-type hydrotalcite)

While stirring a predetermined amount of ion-exchanged water in a 1 L volume reaction tank, 160 mL of a 1.5 mol/L magnesium chloride aqueous solution, 120 mL of a 1 mol/L aluminum chloride aqueous solution and a mixture of 90 mL of a 8 mol/L sodium hydroxide aqueous solution with 60 mL of a 1 mol/L sodium carbonate aqueous solution were added simultaneously and reacted to obtain a reaction product. The pH during the reaction was 9.5.

The obtained reaction product was subjected to solid-liquid separation with a Nutsche filter, and the resulting solid was washed with ion-exchanged water, after which ion-exchanged water was again added to obtain a re-emulsified slurry. The re-emulsified slurry was subjected to hydrothermal treatment for 13 hours at 170°C and cooled.

The obtained slurry was then heated to 80°C, and an aqueous solution of 0.55 g sodium stearate (80°C) was slowly added to the slurry while stirring, maintaining this state for 30 minutes. The obtained slurry was subjected to solid-liquid separation with a Nutsche filter, and the resulting solid was washed with ion-exchanged water and dried at 105°C for 18 hours.

The resulting mixture was pulverized with a hammer mill and then screened with a 150 micron filter to obtain unburned MgAl-type hydrotalcite powder for Comparative Example 1.

Comparative Example 2

(Production of 250°C-burned MgAl-type hydrotalcite)

The unburned MgAl-type hydrotalcite powder of Comparative Example 1 was placed on a stainless steel tray, the tray was loaded into an airflow-controlled constant temperature oven (DKN Model-602 by Yamato Scientific Co., Ltd.) which had been preheated to 250°C, and burning was carried out for 2 hours at the same temperature in air.

The contents were removed out of the burned tray to obtain 250°C-burned MgAl-type hydrotalcite powder for Comparative Example 2.

Comparative Example 3

(Production of 600°C-burned MgAl-type hydrotalcite)

While stirring a predetermined amount of ion-exchanged water in a 1 L volume reaction tank, 160 mL of a 1.5 mol/L magnesium chloride aqueous solution, 120 mL of a 1 mol/L aluminum chloride aqueous solution and a mixture of 90 mL of a 8 mol/L sodium hydroxide aqueous solution with 60 mL of a 1 mol/L sodium carbonate aqueous solution were added simultaneously and reacted to obtain a reaction product. The pH during the reaction was 9.5.

The obtained reaction product was subjected to solid-liquid separation with a Nutsche filter, and the resulting solid was washed with ion-exchanged water and dried at 105°C for 18 hours. The obtained dried product was pulverized with a hammer mill and then screened with a 150 micron filter to obtain powder.

The resulting powder was placed in a crucible, the crucible was placed in a kiln previously heated to 600°C, and burning was carried out in air for 2 hours at the same temperature.

The contents were removed out of the burned crucible to obtain 600°C-burned MgAl-type hydrotalcite powder for Comparative Example 3.

Comparative Example 4

(Production of unburned MgAlZn-type hydrotalcite)

An acid mixture (A) of 1.5 mol/L magnesium chloride and 0.50 mol/L aluminum chloride, a 5.7 mol/L zinc chloride aqueous solution (B) and an alkaline mixed aqueous solution of 3.3 N caustic soda and 0.2 mol/L sodium carbonate (C) as starting materials, were used in continuous reaction with the flow ratio A:B:C = 1:0.04: 1.38 in a 1 L volume reaction tank, to obtain a reaction product. The pH during the reaction was 9.5.

The obtained reaction product was subjected to solid-liquid separation with a Nutsche filter, and the resulting solid was washed with ion-exchanged water, after which ion-exchanged water was again added to obtain a re-emulsified slurry. The re-emulsified slurry was subjected to hydrothermal treatment for 14 hours at 160°C and cooled.

The obtained slurry was then heated to 80°C, and an aqueous solution of 0.55 g sodium stearate (80°C) was slowly added to the slurry while stirring, maintaining this state for 30 minutes. The obtained slurry was subjected to solid-liquid separation with a Nutsche filter, and the resulting solid was washed with ion-exchanged water and dried at 105°C for 18 hours.

The resulting mixture was pulverized with a hammer mill and then screened with a 150 micron filter to obtain unburned MgAlZn-type hydrotalcite powder for Comparative Example 4.

Comparative Example 5

(Production of 250°C-burned MgAlZn-type hydrotalcite)

The unburned MgAlZn-type hydrotalcite powder of Comparative Example 4 was placed on a stainless steel tray, the tray was loaded into an airflow-controlled constant temperature oven (DKN Model-602 by Yamato Scientific Co., Ltd.) which had been preheated to 250°C, and burning was carried out for 2 hours at the same temperature in air.

The contents were removed out of the burned tray to obtain 250°C-burned MgAlZn-type hydrotalcite powder for Comparative Example 5.

Comparative Example 6

(Production of 350°C-burned MgAlZn-type hydrotalcite)

For Comparative Example 6, 350°C-burned MgAlZn-type hydrotalcite powder was obtained in the same manner as Comparative Example 5, except that the burning temperature was changed to 350°C.

Comparative Example 7

(Production of 900°C-burned MgAlZn-type hydrotalcite)

For Comparative Example 7, 900°C-burned MgAlZn-type hydrotalcite powder was obtained in the same manner as Example 1, except that the burning temperature was changed to 900°C.

Comparative Example 8

(Production of 1000°C-burned MgAlZn-type hydrotalcite)

For Comparative Example 8, 1000°C-burned MgAlZn-type hydrotalcite powder was obtained in the same manner as Example 1, except that the burning temperature was changed to 1000°C.

The structures of each of the hydrotalcites of Examples 1 to 3 and Comparative Examples 1 to 8 obtained as described above were confirmed by X-ray diffraction (XRD) and thermogravimetric differential thermal analysis (TG-DTA).

For XRD, a "EMPYREAN" by PANalytical Co. was used to confirm the presence or absence of an oxide or spinel structure formed by burning, based on the peak pattern.

For TG-DTA, a TG-DTA 2000SA by Bruker AXS Co. was used for measurement up to 800°C at a temperature-elevating rate of 10°C/min, and the presence or absence of interlayer water and interlayer anions in the hydrotalcite and hydroxyl groups (OH group) in the base layer was confirmed from the weight loss curve.

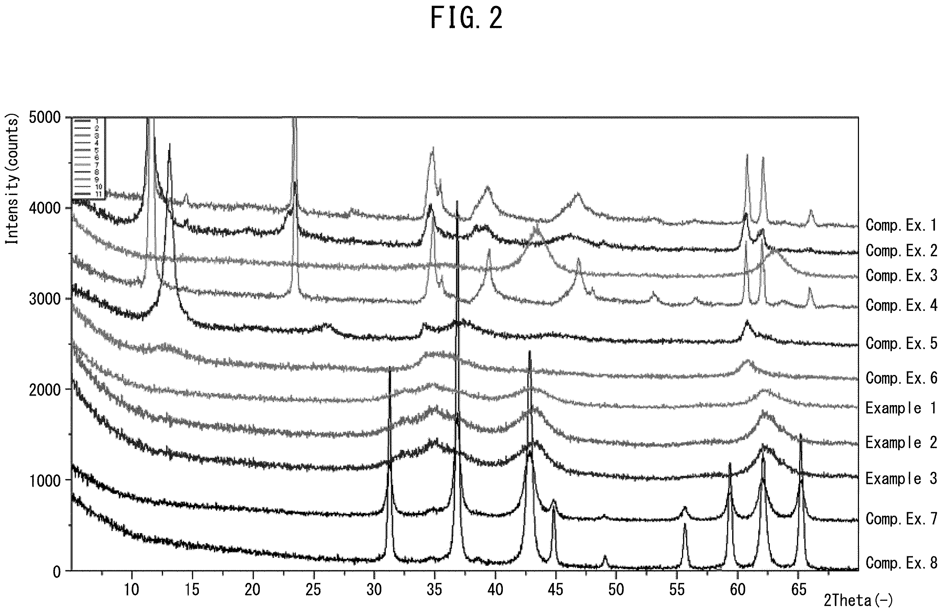

The XRD analysis results are shown in Table 1 and Fig. 2, and the TG-DTA analysis results are shown in Table 1.

For the XRD analysis results, "HT" in Table 1 stands for "hydrotalcite". For the TG-DTA analysis results, "A" to "D" in Table 1 have the following meanings.

A: No interlayer water, interlayer anions or base layer OH groups.
B: No interlayer water or interlayer anions, but contained base layer OH groups.
C: No interlayer water, but contained interlayer anions and base layer OH groups.
D: Contained interlayer water, interlayer anions and base layer OH groups.

Each of the hydrotalcites of Examples 1 to 3 and Comparative Examples 1 to 8 were measured for specific surface area as determined by the BET method and for weight loss during high heating at 500°C, in the following manner. The measurement results are shown in Table 1 below.

(Specific surface area as determined by BET method)

The specific surface area as determined by the BET method was measured using a "BELSORP-mini" by Microtrac Bell. Specifically, measurement was by the constant volume gas adsorption method using nitrogen gas, determining the specific surface area ($m^2/g$) by multipoint BET analysis.

(Weight loss during high heating at 500°C)

The weight loss during high heating at 500°C was measured by the following procedure.

(1) The sample is placed in a stainless steel tray and dried for 2 hours at 120°C.
(2) A 1 g portion of the dried sample is placed in a crucible.
(3) The crucible is set in a kiln and burning is carried out for 500°C for 1 hour.
(4) After burning, the crucible is removed out, the weight (g) of the sample is measured, and the percentage reduction (%) in weight is calculated.

Each of the hydrotalcites of Examples 1 to 3 and Comparative Examples 1 to 8 were used to fabricate molded articles by the procedure described below, and the heat stability, colorability and foamability of each molded article was evaluated.

(Production of molded articles)

A resin composition was obtained by mixing 100 parts by mass of a vinyl chloride resin (trade name: TK-1300 by Shin-Etsu Chemical Co., Ltd.), 50 parts by mass of a plasticizer (trade name: DINP (diisononyl phthalate) by Daihachi Chemical Industry Co., Ltd.) and 30 parts by mass of calcium carbonate (trade name: WHITEON SB by Shiraishi Calcium Co., Ltd.) in a Henschel mixer (Nippon Coke & Engineering Co., Ltd.) at 80°C.
To 180 g of the obtained resin composition there were then added 3 g of each hydrotalcite of Examples 1 to 3 and Comparative Examples 1 to 8 to be evaluated, and 0.1 g of stearic acid, and an 8-inch roll mill (Yasuda Seiki Seisakusho Co., Ltd.) was used for kneading under conditions of 170°C, 5 minutes to obtain a molded article.
The obtained molded article was subjected to a static heat stability test, a colorability test and a foaming test to evaluate the heat stability, colorability and foamability, respectively, of each molded article.

(Static heat stability test)

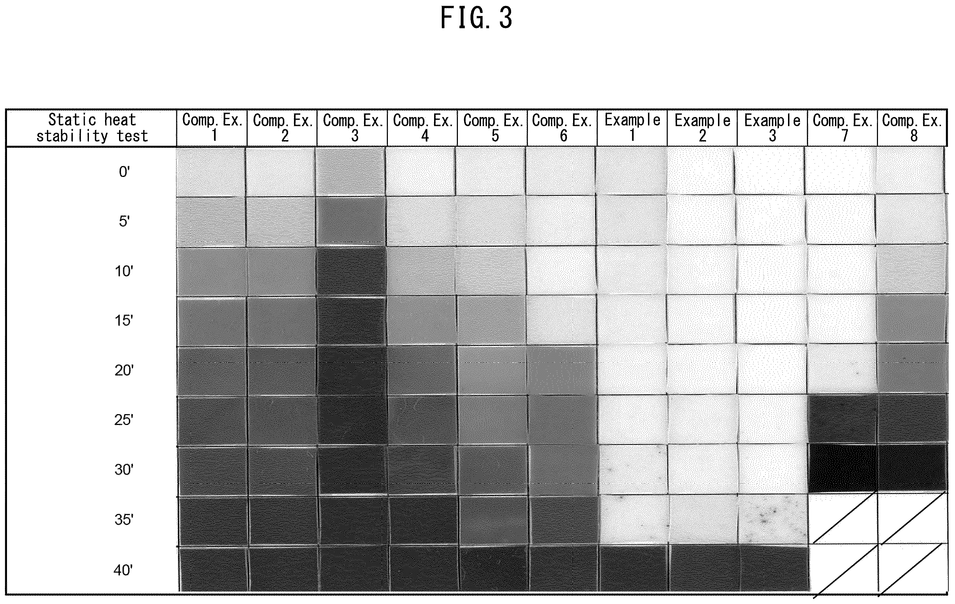

The test molded article was placed in a gear oven (Espec Corp.) set to 190°C, and the molded article was removed out every 5 minutes to confirm any change in color of the molded article. The results of the static heat stability test are shown in Fig. 3.

(Colorability test)

The test molded article was used to obtain a sheet by sheet molding under conditions of 190°C, 2 MPa, 5 minutes using a press molding machine (Shinto Metal Industries, Ltd.). The colorability of the sheet obtained in this manner was confirmed by measuring the YI (yellowness index) using a color difference meter (Nippon Denshoku Industries Co., Ltd.). The results of the colorability test are shown in Table 1 below.

(Foaming test)

The density ($g/cm^3$) of the test molded article was measured using an SD120L electronic density meter (AlfaMirage Co., Ltd.), and used as the density before foaming.
The test molded article was also used to obtain a sheet by sheet molding under conditions of 230°C, 1 MPa, 5 minutes using a press molding machine (Shinto Metal Industries, Ltd.). The density ($g/cm^3$) of the sheet obtained in this manner was measured using an SD120L electronic density meter (AlfaMirage Co., Ltd.), and used as the density after foaming.
The density before foaming and the density after foaming were used to calculate the percentage reduction (%) in density by the following formula.

$$\text{Percentage reduction } (\%) = 100 \times (Va - Vb)/Va$$

(In the formula, Va represents the density before foaming and Vb represents the density after foaming.)

The calculated percentage reduction was evaluated as follows.

VG: Percentage reduction of 0 to 3%
G: Percentage reduction of 3 to 6%
P: Percentage reduction of 6% or greater

The results of the foamability test for each molded article are shown in Table 1.

[Table 1]

Table 1

| | Comp. Ex. 1 | Comp. Ex. 2 | Comp. Ex. 3 | Comp. Ex. 4 | Comp. Ex. 5 | Comp. Ex. 6 | Example 1 | Example 2 | Example 3 | Comp. Ex. 7 | Comp. Ex. 8 |
|---|---|---|---|---|---|---|---|---|---|---|---|
| Metal of starting material | MgAl | MgAl | MgAl | MgAlZn | MgAlZn | MgAlZn | MgAlZn | MgAlZn | MgAlZn | MgAlZn | MgAlZn |
| Burning temperature (°C) | Unburned | 250 | 600 | Unburned | 250 | 350 | 450 | 600 | 800 | 900 | 1000 |
| Specific surface area by BET method (m²/g) | 8.1 | 9.7 | 131 | 6.8 | 8.2 | 100.6 | 194.1 | 182.8 | 154.7 | 77.9 | 33.1 |
| XRD peak pattern | HT | HT | Oxide | HT | HT | HT and oxide | Oxide | Oxide | Oxide | Spinel | Spinel |
| TG-DTA analysis results | D | C | A | D | C | B | A | A | A | A | A |
| Weight loss during high heating (%) | 40 | 29 | 1 | 39 | 29 | 18 | 1 | 1 | 1 | 1 | 1 |
| Colorability test results: YI | 84.2 | 77.8 | 77.3 | 73.4 | 70.2 | 48.5 | 37.9 | 22.2 | 23.3 | 24.1 | 52.4 |
| Foamability test results — Density before foaming (g/cm³) | 1.37 | 1.37 | 1.38 | 1.37 | 1.37 | 1.36 | 1.36 | 1.37 | 1.36 | 1.35 | 1.38 |
| Density after foaming (g/cm³) | 1.27 | 1.29 | 1.31 | 1.29 | 1.31 | 1.30 | 1.34 | 1.35 | 1.34 | 1.32 | 1.32 |
| Percentage reduction (%) | 6.9 | 5.9 | 5.1 | 5.8 | 4.4 | 4.3 | 1.4 | 1.3 | 1.6 | 2.6 | 4.0 |
| Assessment (3-level scale) | P | G | G | G | G | G | VG | VG | VG | VG | G |

As shown in Table 1 and Fig. 3, the zinc-containing hydrotalcites of Examples 1 to 3 obtained by strong burning had excellent heat stability, with adequately inhibited coloration and foaming as well.

However, the zinc-containing or zinc-free hydrotalcites of Comparative Examples 1, 2 and 4 to 6, which were unburned or burned at conventional burning temperature, had inferior heat stability and insufficiently inhibited coloration and foaming, as shown in Table 1 and Fig. 3.

The zinc-free hydrotalcite of Comparative Example 3, while being strongly burned, also had inferior heat stability and insufficiently inhibited coloration and foaming, as shown in Table 1 and Fig. 3.

The zinc-containing hydrotalcites of Comparative Examples 7 and 8, which were obtained by excessive burning at high burning temperatures of 900°C and 1000°C, both had inferior heat stability, the zinc-containing hydrotalcite of Comparative Example 8 in particular having insufficiently inhibited coloration and foaming, as shown in Table 1 and Fig. 3.

INDUSTRIAL APPLICABILITY

Since the strongly burned zinc-containing hydrotalcite of the invention is nontoxic and highly safe, it can be utilized as a stabilizer for resin compositions and molded articles in the fields of medical care and food packaging, for example.

Moreover, because foaming is inhibited and the heat stability and colorability are excellent even at high processing temperatures, it can be utilized in plastic fields that use chlorine-containing resins in a wide range from soft to hard materials, such as interior and exterior materials for building materials and automobiles, household appliances, food packaging materials and insulating materials.

It can also be utilized in the field of plastics such as chlorinated PVC (CPVC), or polyolefin resins in agricultural films (non-chlorine-containing resins), which are processed at high temperatures.

**Claims**

1. A hydrotalcite represented by formula (1) and having a specific surface area of 120 $m^2/g$ to 250 $m^2/g$ as determined by a BET method.

$$M^{2+}_x Zn_y \cdot M^{3+}_z O_{x+y+(3/2)z} \qquad (1)$$

   In the formula, $M^{2+}$ represents at least one divalent metal ion, $M^{3+}$ represents at least one trivalent metal ion, and x, y and z represent numbers satisfying $0 < x \leq 0.5$, $0 < y \leq 0.2$ and $0 < z \leq 0.4$.

2. The hydrotalcite according to claim 1, wherein the specific surface area is 150 $m^2/g$ to 200 $m^2/g$.

3. The hydrotalcite according to claim 1 or 2, wherein $M^{2+}$ in formula (1) is $Mg^{2+}$ and $M^{3+}$ is $Al^{3+}$.

4. The hydrotalcite according to any one of claims 1 to 3, wherein a weight loss during high heating at 500°C is 10% or lower.

# FIG. 1

FIG. 2

EP 4 464 667 A1

# FIG. 3

| Static heat stability test | Comp. Ex. 1 | Comp. Ex. 2 | Comp. Ex. 3 | Comp. Ex. 4 | Comp. Ex. 5 | Comp. Ex. 6 | Example 1 | Example 2 | Example 3 | Comp. Ex. 7 | Comp. Ex. 8 |
|---|---|---|---|---|---|---|---|---|---|---|---|
| 0' | | | | | | | | | | | |
| 5' | | | | | | | | | | | |
| 10' | | | | | | | | | | | |
| 15' | | | | | | | | | | | |
| 20' | | | | | | | | | | | |
| 25' | | | | | | | | | | | |
| 30' | | | | | | | | | | | |
| 35' | | | | | | | | | | | |
| 40' | | | | | | | | | | | |

## INTERNATIONAL SEARCH REPORT

International application No.

**PCT/JP2022/042554**

### A. CLASSIFICATION OF SUBJECT MATTER

***C01F 7/785***(2022.01)i; ***C01G 9/00***(2006.01)i; ***C08K 3/26***(2006.01)i
FI: C01F7/785; C08K3/26; C01G9/00 B

According to International Patent Classification (IPC) or to both national classification and IPC

### B. FIELDS SEARCHED

Minimum documentation searched (classification system followed by classification symbols)

C01F7/785; C01G9/00; C08K3/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | SMOLAKOVA, Lucie et al. Industrial &Engineering Chemistry Research. 2017, vol. 56, no. 16, pp. 4638-4648, DOI:10.1021/acs.iecr.6b04927 <br> abstract, table 2 | 1-3 |
| A | MEZA-FUENTES, E. et al. Thermochimica Acta. 2020, vol. 687, pp. 1-9 <br> entire text | 1-4 |
| A | JP 2012-92017 A (TODA KOGYO CORP) 17 May 2012 (2012-05-17) <br> entire text | 1-4 |
| A | JP 2008-56506 A (TODA KOGYO CORP) 13 March 2008 (2008-03-13) <br> entire text | 1-4 |
| A | GAO, Lida et al. Energy &Fuels. 2009, vol. 23, no. 1/2, pp. 624-630 <br> entire text | 1-4 |
| A | JP 2018-184305 A (MARUO CALCIUM) 22 November 2018 (2018-11-22) <br> entire text | 1-4 |

☑ Further documents are listed in the continuation of Box C.    ☑ See patent family annex.

| | |
|---|---|
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **11 January 2023** | **24 January 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2022/042554**

| C. | DOCUMENTS CONSIDERED TO BE RELEVANT | |
|---|---|---|
| Category* | Citation of document, with indication, where appropriate, of the relevant passages | Relevant to claim No. |
| A | JP 2015-505799 A (L'AIR LIQUIDE SOCIETE ANONYME POUR L'ETUDE ET L'EXPLOITATION DES PROCEDES GEORGES CLAUDE) 26 February 2015 (2015-02-26) entire text | 1-4 |
| A | JP 2015-502248 A (CLARIANT PRODUKTE (DEUTSCHLAND) GMBH) 22 January 2015 (2015-01-22) entire text | 1-4 |

Form PCT/ISA/210 (second sheet) (January 2015)

**INTERNATIONAL SEARCH REPORT**
Information on patent family members

International application No.

**PCT/JP2022/042554**

| Patent document cited in search report | | | Publication date (day/month/year) | Patent family member(s) | | | Publication date (day/month/year) |
|---|---|---|---|---|---|---|---|
| JP | 2012-92017 | A | 17 May 2012 | KR 10-2010-0138966 entire text CN 10198093 | A A | | |
| JP | 2008-56506 | A | 13 March 2008 | US 2010-0234511 entire text EP 002058280 entire text KR 10-2009-0053798 | A1 A1 A | | |
| JP | 2018-184305 | A | 22 November 2018 | (Family: none) | | | |
| JP | 2015-505799 | A | 26 February 2015 | US 2014-0309102 entire text EP 002599541 entire text CN 104080528 KR 10-2014-0098823 | A1 A1 A A | | |
| JP | 2015-502248 | A | 22 January 2015 | EP 002780110 entire text CN 104039444 | A1 A | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63046248 A

- JP 3157437 A